# EUROPEAN PATENT SPECIFICATION

(11) **EP 4 091 103 B1**
(45) Date of publication and mention of the grant of the patent: **04.12.2024**
(21) Application number: 20800343.4
(22) Date of filing: 08.10.2020
(51) Int. Cl.: G06K 19/077, G06Q 10/08, G09F 3/03

(54) **RFID THREE STATE SECURITY E-SEAL**
RFID-E-SIEGEL MIT DREI SICHERHEITSZUSTÄNDEN
SCEAU ÉLECTRONIQUE DE SÉCURITÉ À TROIS ÉTATS RFID

(30) Priority: 13.01.2020 IN 202011001519
(43) Date of publication of application: 23.11.2022
(73) Proprietor: LEGHORNGROUP PRIVATE LIMITED, Bangalore - 560058, Karnataka (IN)
(72) Inventor: SAUDAGAR, Ghulam Mohammed, Bengaluru, Karnataka - 560032 (IN)
(74) Representative: Cabinet Chaillot
(86) International application number: PCT/IN2020/050866
(87) International publication number: WO 2021/144806

(56) References cited:
- EP-A1- 2 189 964
- US-A1- 2009 066 503
- US-A1- 2019 080 631

## Description

### Technical Field

The present invention relates in general to e-seal and in particular to electronic e-seals (e-seals) for logistic and transport use. More in detail, the invention relates to a RFID security with improved tampering resistance.

### Background

These types of seal are used for the security closure of container or similarly used for the transportation of goods.

Known seals are widely used to lock the containers so as to ascertain their protection and know whether any tampering or tampering attempt has been made; to be removed or opened, the e-seal has to be deeply, irremediably and evidently damaged. A tampered security e-seal will give immediate signal about the tampering or tampering attempt of the container, as proof that goods inside have been stolen or damaged.

A known type of seals, called bolt seals, include a metallic bolt that could be covered partially or completely with plastic, and a second part to close the metallic bolt, with a metallic bushing seat that can be covered with plastic. When the metallic bolt is inserted in the bushing seat, the seal cannot be opened anymore so to secure the container and the goods inside.

Bolt seals have several advantages as they are very strong and they show evident tampering attempts.

Moreover, they can support passive RFID technology - RFID stands for Radio- Frequency Identification), which can signal remotely the seal identification and the tampering event. Seals of this type are called e-seals. An e-seal is a device with RFID chip inside it which can be read by enabled devices via fixed reader, handheld reader or any other mode. Each e-seal has a unique RFID tag which contains electronically stored information.

E-seals are widely used to lock the containers so as to ascertain their protection and know whether any tampering or tampering attempt has been made. But not all e-seals existing in market are fully tamper proof. Indeed, known e-seal are not capable of informing about 'Open' e-seal status, which means that the intended user even when the e-seal is not in use is able to verify open/unlock e-seal status (i.e not used at all) along with states that is tampered and non-tampered later upon use. US 2009/066503 A1 discloses a Radio frequency Identification (RFID) seal for containers. The application is focused on detecting status of a seal based on tracking position of an RFID chip in the seal. In addition, the seal records auxiliary data and transmits the recorded data (i.e. the status information and the auxiliary data) to a communication center via Global positioning satellites (GPS). Another example of a known sealing device is shown in EP 2189964 A1, which discloses a sealing device including a housing and a closure member. The sealing device detects unauthorized access events by authorizing and validating identity of transponders associated with the sealing device. Further, US 2019/080631 A1 discloses a self-locking security seal. The security seal includes two locking devices, an RFID tag, RFID detection means and a safety means to secure the locking devices and activate the RFID tag. The RFID detection means detects conditions of the security seal i.e., condition of seal open, condition of seal closed and condition of seal tempered and transmits corresponding logic signals.

### Summary of Invention

The present invention has been developed in response to the present state of the art, and in particular, in response to the problems and needs in the art that have not yet been fully solved by currently available techniques and processes.

It is an object of the invention to provide a security e-seal with passive RFID incorporating relevant improvements for tampering resistance.

It is another object of the present invention to provide the disclosed e-seal with RFID tag that aids to acknowledge whether the e-seal is locked- 'Non-Tampered' (when the pin and lock part are connected) or it is unlocked- 'Open' (when the pin and lock part are not connected) or tampered.

It is another object of the present invention that the product/cargo/container can be tracked until it arrives at the destination location.

How the foregoing objects are achieved will be clear from the following brief description. In this context, it is clarified that the description provided is non-limiting and is only by way of explanation. Other objects and advantages of the invention will become apparent as the foregoing description proceeds, taken together with the accompanying drawings and the appended claims

These and other objects are achieved by e-seal according to the first of the appended claims. Further features of the invention are defined by the dependent claims.

### Brief Description of Drawings

The characteristics and advantages of the e-seal according to the present invention will become apparent from the following description of an embodiment thereof, provided by way of non-limiting example with reference to the appended drawings wherein:
**Fig.1**

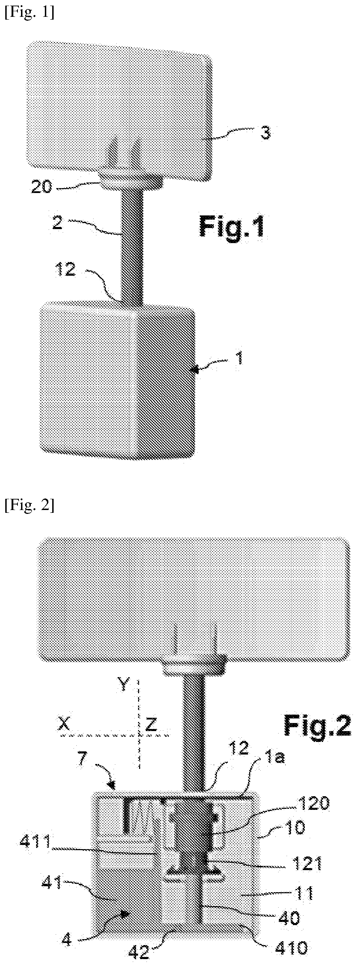

   [Fig.1] is a prospective view of the closed e-seal.
**Fig.2**
   [Fig.2] is a front view of the closed e-seal of figure 1 with a cover of a lock body of the e-seal removed.
**Fig.3**

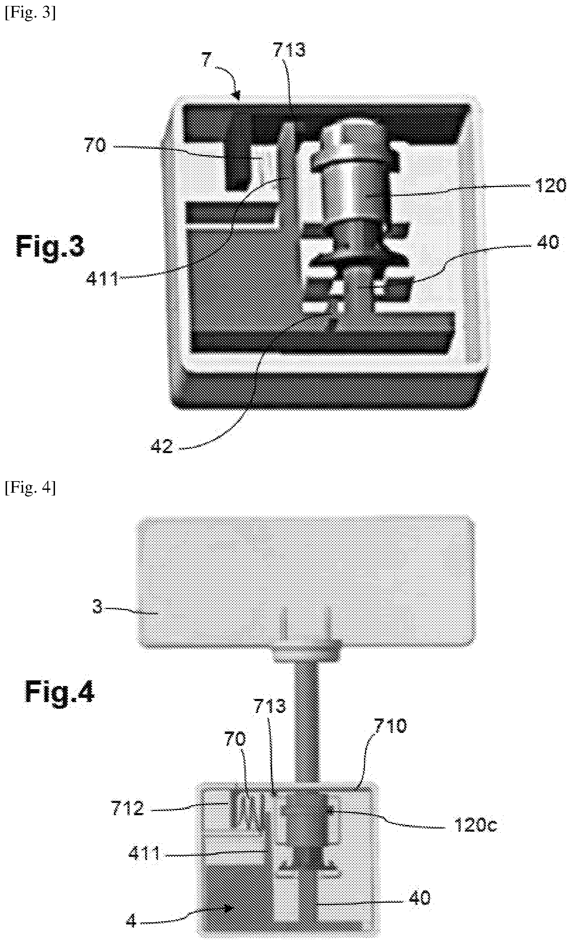

   [Fig.3] shows activation means and tampering detection means of the e-seal, in the position of the e-seal opened, without a bolt inserted.
**Fig.4**
   [Fig.4] shows the position of means of figure 3 after the insertion of the bolt.
**Fig.5**

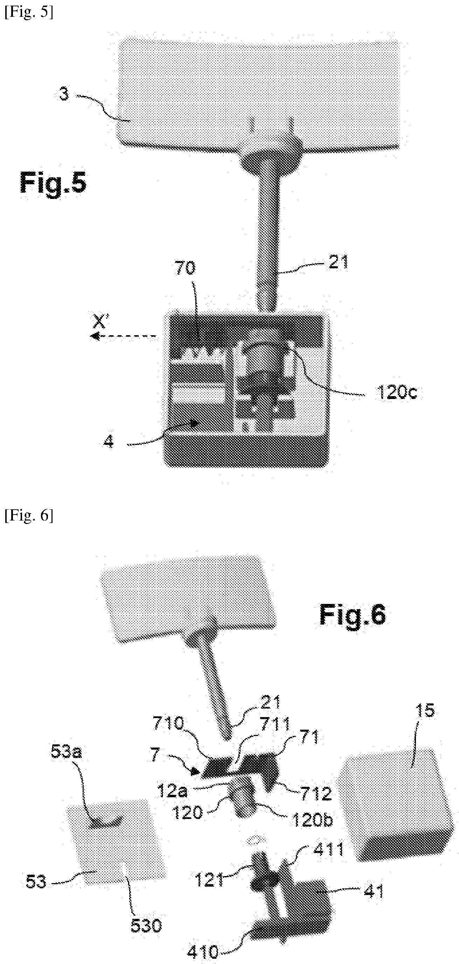

   [Fig.5] shows the position of the tampering means of figure 3 and 4 after the removal of the bolt.
**Fig.6**
   [Fig.6] is an exploded view of the e-seal according to the previous figures.
**Fig.7**

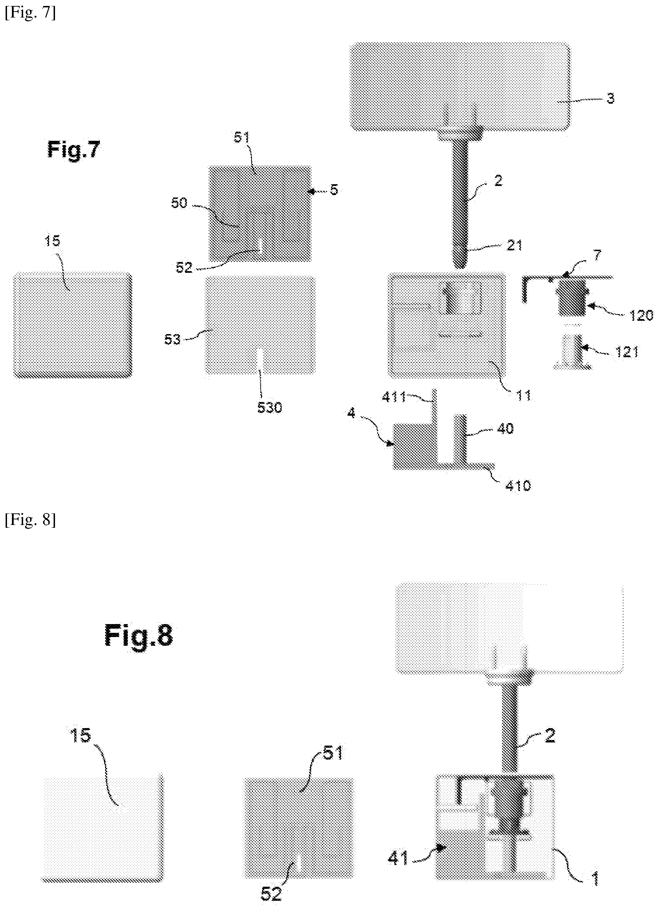

   [Fig.7] shows a first embodiment of the e-seal, including an UHF RFID tag.
**Fig.8**
   [Fig.8] is an exploded view of the first embodiment of the e-seal of figure 7.
**Fig.9**

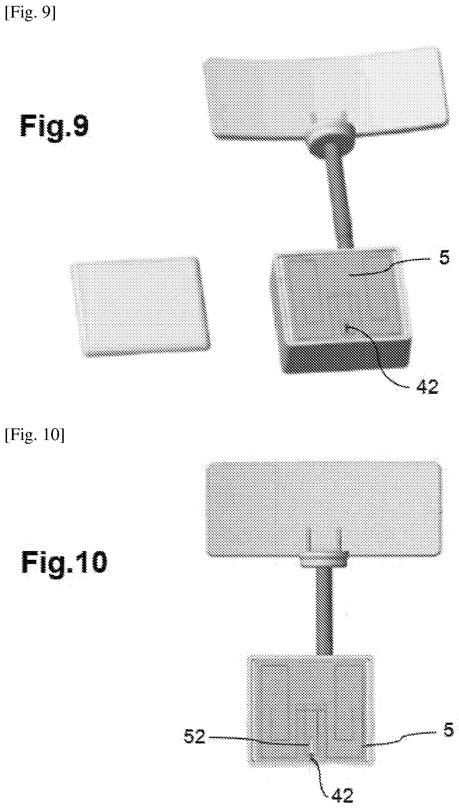

   [Fig.9] is a view of the first embodiment of figures 7 and 8, with the e-seal in open position.
**Fig.10**
   [Fig.10] is a view of the first embodiment, with the e-seal in closed position, with bolt inserted.
**Fig.11**

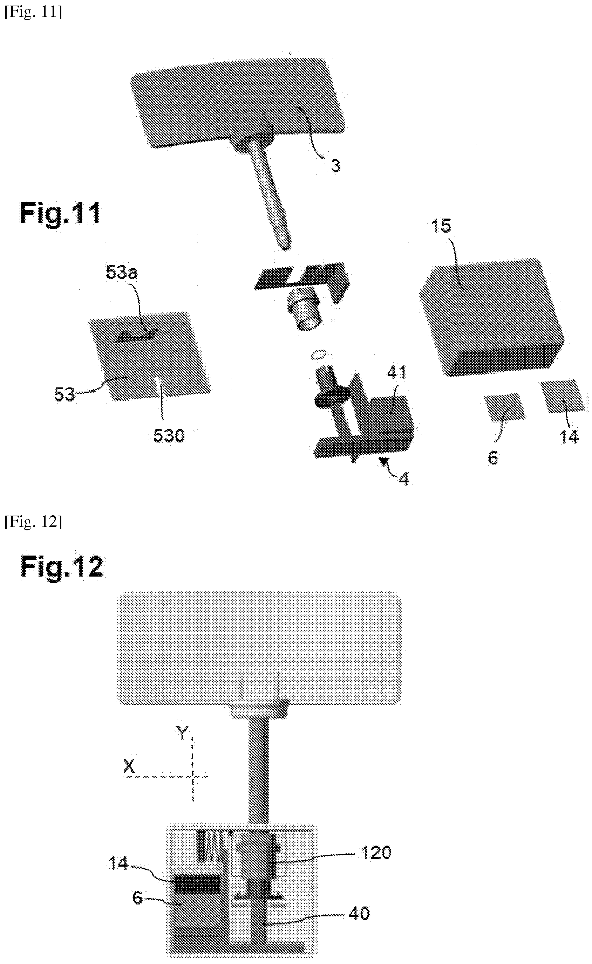

   [Fig.11] is an exploded view of a second embodiment of the e-seal, including an NFC RFID tag.
**Fig.12**
   [Fig.12] is a view of the second embodiment of figure 10 with the bolt inserted.

### Detailed Description

According to the figures, the bolt e-seal according to the invention comprises a lock body 1, a bolt 2 and a flag 3 firmly connected to a first end 20 of the bolt 2. The bolt 2 also comprises a second end 21, or free end 21.

A first RFID tag (not shown) is inserted into the flag 3. The first RFID tag emits an own identification signal. If the bolt 2 is cut the first RFID tag stops to emit signal.

The lock body 1 comprises a frame 10 defining a housing 11. On a lateral wall 1a of the frame 10 is made a hole 12 for the insertion of said free end 21 of the bolt 2 inside the housing 11 along a vertical insertion axis or axis Y.

Inside the housing 11 an insertion channel oriented along the vertical axis Y is defined for the insertion of the free end 21 of the bolt 2. The insertion channel is defined by a first tubular insert 120, preferably, but not limit to, made of metal. The first tubular insert 120 is firmly housed inside the housing 11 and in a coaxial position with respect to the hole 12 and aligned along the vertical axis of insertion Y.

The tubular insert 120 provides an inlet portion 120a of a diameter and an outlet portion 120b of a minor diameter than the inlet portion. A step 120c is defined between the inlet 120a and the outlet 120b portion of the first tubular insert 120.

Inside the outlet portion 120b is coaxially housed a second tubular insert 121, preferably but not limit to, made of plastic. The second tubular insert 121 are arranged in continuity with the first tubular insert 120, in order to define the insertion channel, along the vertical axis Y.

The second tubular insert 121 abuts against the step 120c. An e-sealing spring is located between the second tubular insert 121 and the step 120c. Also the second tubular insert 121 is firmly housed inside the housing 11 of the lock body 1.

Activation means 4 for the detection of the Closed state of the e-seal are housed into the housing 11 of the lock body 1. The activation means 4 are capable of sliding according to the insertion axis Y in order to activate the Closed condition of the e-seal, i.e. in order to cause a change of state of a second RFID tag located into the lock body 1.

More in detail, the activation means 4 comprises a plug 40 arranged in a sliding manner inside the insertion channel; in the example shown in the figures the plug 40 is arranged in a sliding manner inside the second tubular insert 121.

The activation means 4 also comprises a main portion 41. A horizontal 410 and a vertical 411 arms project from the main portion 41 respectively parallel to said horizontal axis X perpendicular to Y and to said vertical axis Y. The plug 40 projects from the horizontal arm 410 according to said vertical axis Y.

The activation means 4 are slidingly movable along the vertical axis Y from a non-activated position to an activated position.

When the e-seal is closed, i.e. when the free end 21 of the bolt 2 is inserted inside the channel, the free end 21 pushes against the top of the plug 40 causing the shifting of the activation means 4 along the insertion axis Y toward the activated position.

In a first embodiment of the invention, shown in the figures from 7 to 10, the second RFID tag is an ultra-high frequency (UHF) RFID tag 5, i.e. a RFID tag that operate between 866 MHz to 960 MHz and can send information about state of the e-seal at distance of several meters.

In a second embodiment of the invention, shown in figures 11 and 12, the second RFID tag is a near-field communication (NFC) RFID tag 6, i.e. a RFID tag from which the information about the state of the e-seal can be read through a reader in the e-seal proximity.

As far as the first embodiment of the invention is concerned, the activation means 4 comprises a pin 42 that projects orthogonally with respect to the plane defined by the directions X and Y, along a direction Z (defining with X and Y a Cartesian coordinate system). The UHF RFID tag 5 comprises a printed circuit 50 and a planar board 51 on which the circuit 50 is printed. The planar board 51 is housed into the lock body 1 in a superimposed arrangement with respect to the activation means 4 along the direction Z, according to an XY plane.

The UHF RFID tag comprises a passage hole 52, formed into the planar board 51 and aligned along the Y direction.

When the activation means 4 are in the non-activated position the pin 42 crosses the UHF RFID planar board 51 through the passage hole 52 and projects over the planar board 51 without to intercept the circuit 50. The UHF RFID tag 5 and the first tag located into the flag 3 emit an own identification signal and this condition corresponds to the Open state of the e-seal.

When the activation means 4 are in the activated position by the insertion of the free end 21 of the bolt 2, the pin 42 is moved along the Y direction and brakes the planar board and the circuit 50, interrupting the signal emitted by the UHF RFID tag 5 (the interruption of the signal emitted by the second tag 5 corresponds to the change of state caused by the activation means); the tag into the flag 3 still emits its own signal. This condition is read as the Closed state of the e-seal according to the invention.

Preferably, a support insert 53 for the UHF RFID tag 5 is provided and arranged between the activation means 4 and the planar board 51 of the tag. The support insert 53 also comprises a slot 530 oriented along axis Y and corresponding, when in use, with the passage hole 52 and the pin 42 slides inside the slot 530. The slot 530 is longer than the passage hole 52 and it extends below the planar body 51 therefore the pin 42 can slide into the slot 530 in order to break the circuit 50.

The support insert 53 also comprises means for the firmly housing of the first and second tubular insert into the housing 11. For example, in figure 6 this means are visible in the form of a shaped profile 53a.

As far as the second embodiment of the invention is concerned, a NFC tag 6 is provided attached to the activation means 4, and in particular to the main portion 41. In this embodiment also shield means are provided. The shield means comprises a metallic leaf 14. The metallic leaf 14 is firmly connected to the lock body 1 of the e-seal in an at least partially superimposed position with respect to the activation means 4, and in particular to the main portion 41.

When the activation means 4 are in the non-activated position the NFC RFID tag 6 is completely covered by the shield means. Therefore, the NFC RFID 6 cannot be read, while the tag into the flag emits it owns signal, and this condition corresponds to the Open state of the e-seal. When the activation means 4 are pushed by the insertion of the free end 21 of the bolt 2 along the insertion axis Y towards the activated position, the NFC RFID slides with respect to the shield means and results not more covered by them (figure 12); in this position, the identification signal emitted by the NFC RFID tag 6 can be read, while the tag into the flag still emits its own signal, and this condition corresponds to the Closed state of the e-seal (and the passage from a non-readable signal to a readable signal corresponds to the change of state of the tag caused by the movement of the activation means).

The shield means can be attached to the support insert 53 in appropriate position.

The lock body 1 also comprises a closure cap 15.

The e-seal according to the invention also detects two tampered states; a first tampered state in the open condition of the e-seal (i.e. bolt not inserted into the lock body 1) and a second tampered state in the closed condition (i.e. bolt inserted into the lock body 1).

The e-seal also comprises tampering detection means 7. With reference to the figures, the tampering detection means 7 are able to close the insertion hole 12 of the lock body 1. The tampering detection means 7 slides from a free-hole position wherein they do not intercept the hole 12 to a blocked-hole position wherein they intercept the passage hole 12.

More in detail in case of tamper attempt, the bolt 2 is not inserted into the hole 12; on the contrary, another can be tamper tool inserted into the hole and then extracted. The insertion of the tamper tool into the hole causes the sliding of the activation means 4 and the detection of the closed state by the second RFID tag 5, 6. Nevertheless, the extraction of the tamper tool from the hole 12 causes the activation of the tampering detection means 7, i.e. their sliding toward the blocked-hole position. The closing of the hole 12 avoids the unauthorized use of the e-seal. Therefore, a first tampered state is detected.

If the tampered consists in the cutting of the bolt, both the signals of both the first and second RFID 5, 6 tags will read as interrupted. This is the second tampered state.

Substantially, in the first tampered state the tampering detection means 7 are able to avoid the insertion of the bolt 2 into the lock body 1. In the second tampered state the tampering action occurs when the bolt is yet inserted into the lock body.

With reference for example to figures 3, 4 and 5 the sliding movement from the free-hole position to the blocked-hole position is activated as a consequence of the movement of the activation means 4 and of the extraction of the tampering tool from the hole 12. In the free-hole position the activation means 4 engages the tampering detection means 7; activation means 4 comprises engagement means in order to engage tampering detection means 7. In the preferred solution, shown in the figures, the engagement means are the vertical arm 411. The disengagement between the activation means 4 and the tampering detection means 7 makes the latter free to move towards the blocked-hole position.

More in detail, the activation means 4 and in particular the vertical arm 411 directed along the Y direction stop the tampering detection means 7 in the free-hole position. When the activation means 4 slides along the Y direction, the vertical arm 411 disengaged from the tampering detection means 7. A spring 70 is provided to exert a pushing action along the X direction. In particular the spring 70 exerts a force that push the tampering detection means 7 away from the bolt, towards the blocked-hole position in an X' direction. When the activation means 4 disengages the tampering detection means 7, the spring 70 push them towards the blocked-hole position. If the bolt is inserted into the insertion hole 12 the engagement between the tampering means 7 and the bolt 2 avoids the sliding of the tampering detection means 7; if the bolt is not into the hole 12, the tampering detection means 7 are free to slide towards the blocked-hole position.

The tampering detection means 7 comprises a L-shaped body 71 with a horizontal planar face 710 adapted to abuts, in use, against the inner surface of the lateral face of the lock body 1 of the seal; the planar face 710 is arranged along the X axis. A second hole 711 (see figure 6) is formed on the horizontal planar face 710 and in the free-hole position the second hole 711 are aligned coaxially with the insertion hole 12, along the Y axis.

The L-shaped body 71 also comprise a vertical planar face 712 that projects substantially perpendicular from the horizontal planar face 710. The vertical planar face 712 is arranged along the Y axis and defines an abutment surface for the spring 70. The spring 70 exerts a pushing action against the vertical planar face 712 in the axis X'.

A tooth 713 projects from the horizontal planar face 710. The vertical arm 411 of the activation means 4 engages with the tooth 713 in order to avoid the sliding of the horizontal planar face 710 under the pushing action of the spring 70.

The disclosed e-seal overcomes the disadvantages of the state of the art. In particular, the e-seal according to the invention is highly secure and effective as it's a three states e-seal supporting two RFID, one in the body and the other one in the flag. The three states or conditions that the current invention e-seal can communicate are namely:
- Open: the e-seal is open and is not in use;
- Closed: the e-seal is closed and is probably attached to secure the article or container.
- Tampered: the e-seal has been tampered.

Again, the e-seal aims the scope of reading the tampered state both when opened (i.e. bolt not inserted) and closed (i.e. bolt inserted). In other words, the e-seal with RFID tag permits to acknowledge whether the e-seal is locked- 'Non-Tampered' or it is unlocked- 'Open' or tampered.

Accordingly, the present invention results in an improved e-seal, having UHF or NFC capabilities showing tamper and non-tamper status.

The e-seal according to the invention has tamper evident capabilities, resulting in systematic tracking of the products along with provision of long read range, larger memory, and ability to read using any appropriate non-expensive device.

The e-seal permits to track safely the product/cargo/container until it arrives at the destination location.

The present invention has been so far described with reference to a preferred embodiment thereof. It is to be understood that there may be other embodiments which refer to the same inventive core, as defined by the scope of protection of the claims set forth below.

## Claims

1. An e-seal for security and traceability in transport comprising:
- a lock body (1);
- a flag (3);
- a bolt (2) firmly connected to the flag (3), said bolt (2) comprising a free end (21) for the insertion according to an insertion axis (Y) into said lock body (1) for the closing of the e-seal, through an insertion hole (12) of the lock body (1);
- a first RFID tag adapted to emit an own identification signal and housed into said flag (3);
- a second RFID tag (5, 6) located into said lock body (1) and adapted to emit an own identification signal when activated;
- activation means (4) of said second RFID tag (5, 6) adapted to move from a non-activated position to an activated position, wherein the moving of said activation means (4) from said non-activated position to said activated position causes a change of state of said second RFID tag (5, 6), said movement of said activation means (4) being caused by the insertion of said bolt (2) into said lock body (1);
- tampering detection means (7) located into said lock body (1)**,** wherein the insertion of the bolt (2) or the tampering tool inside said lock body (1) causes the disengagement between said activation means (4) and said tampering detection means (7) and wherein the subsequent extraction of said bolt (2) or the tampering tool from said lock body (1) causes the movement of said tampering detection means (7) from said free-hole position to said block-hole position, **characterized in that** the tampering detection means (7) is configured to be movable from a free-hole position, and is configured to not intercept said insertion hole (12) to a blocked-hole position, and to intercept the insertion hole (12) in order to avoid the insertion of the bolt (2) or a tampering tool inside said lock body (1), wherein in said non-activated position, the said activation means (4) engages said tampering detection means (7) in order to maintain the tampering detection means (7) in the free-hole position.

2. The e-seal according to claim 1 wherein said activation means (4) moves from said non-activated to said activated position along said insertion axis (Y).

3. The e-seal according to claim 1 or 2 wherein said tampering detection means (7) moves from said free-hole position to said blocked-hole position along an horizontal axis (X) perpendicular to said insertion axis (Y).

4. The e-seal according to any of the previous claims wherein said lock body (1) defines a housing (11), an insertion channel for the insertion of said free end (21) of said bolt (2).

5. The e-seal according to claim 4 wherein said insertion channel is defined inside said housing (11) by a first and a second tubular inserts (120, 121) aligned along said insertion axis (Y) and coaxially arranged with said hole (12).

6. The e-seal according to claim 5 wherein said activation means (4) comprises a plug (40) arranged in a sliding manner inside said insertion channel.

7. The e-seal according to claim 5 or 6 wherein said activation means (4) comprises engagement means that engages with said tampering detection means (7) when the tampering detection means (7) are in the free-hole position and when the activation means (4) are in the non-activated position.

8. The e-seal according to claim 7 wherein said engagement means are a vertical arm (411) of said activation means (4) arranged parallel to said insertion axis (Y).

9. The e-seal according to claim 8 wherein said tampering detection means (7) comprises a tooth (713) for the engagement with said vertical arm (411).

10. The e-seal according to any of the previous claims wherein a spring (70) is provided to push said tampering detection means (7) towards said blocked-hole position.

11. The e-seal according to any of the previous claims, wherein said tampering detection means (7) comprises a planar face (710) arranged perpendicular to the insertion axis (Y) with a second hole (711) that in the free-hole position is aligned with said insertion hole (12), in the blocked-hole position the planar face (710) intercepts the insertion hole (12).

12. The e-seal according to any of the previous claims wherein said second RFID tag (5) located into said lock body (1) is an ultra-high frequency UHF RFID tag (5).

13. The e-seal according to claim 12 wherein the movement of said activation means (4) causes an interruption of the emission of the signal from said UHF RFID tag (5).

14. The e-seal according to claim 13 wherein said UHF RFID tag (5) comprises a planar board (51) and a circuit (50) printed on the planar board, a passage hole (52) is formed into the planar board (51) and aligned along the (Y) axis, the planar board (51) is mounted in a superimposed arrangement with respect to the activation means (4) on a (X, Y) plane, the activation means (4) comprises a pin (42) that crosses the UHF RFID planar board (51) through the passage hole (52).

15. The e-seal according to claim 14 wherein in the non-activated position the pin (42) crosses the passage hole (52) without to cut the printed circuit (50), the movement of the activation means (4) along the insertion axis (Y) towards the activated position causes the cutting of the circuit (50) and as consequence the UHF RFID tag (5) stops to emit own identification signal.

16. The e-seal according to any of the previous claims wherein said second RFID tag (6) located into said lock body (1) is a near field communication NFC RFID tag (6).

17. The e-seal according to claim 16 the NFC RFID tag (6) is connected to a main portion of said activation means (4).

18. The e-seal according to claim 17 comprising shield means adapted to shield the signal emitted by said NFC RFID tag (6).

19. The e-seal according to claim 18 wherein said shield means are arranged in a superimposed position with respect to said NFC RFID tag (6) in order to shield the signal emitted by said NFC RFID tag (6), while in the activated position of said activation means (4) said NFC RFID tag (6) is not covered by said shield means and the identification signal emitted by the tag can be read.

20. The e-seal according to claim 18 or 19 wherein said shield means comprises a metallic leaf (14).

## Patentansprüche

1. - e-Siegel für Sicherheit und Rückverfolgbarkeit beim Transport, umfassend:
- einen Schlosskörper (1);
- eine Fahne (3);
- einen Bolzen (2), der fest mit der Fahne (3) verbunden ist, der Bolzen (2) umfassend ein freies Ende (21) zum Einführen gemäß einer Einführachse (Y) in den Schlosskörper (1) zum Schließen des e-Siegels durch ein Einführloch (12) des Schlosskörpers (1);
- ein erstes RFID-Tag, das angepasst ist, um ein eigenes Identifizierungssignal zu emittieren, und in der Fahne (3) untergebracht ist;
- ein zweites RFID-Tag (5, 6), das sich in dem Schlosskörper (1) befindet und angepasst ist, um bei Aktivierung ein eigenes Identifizierungssignal zu emittieren;
- Aktivierungseinrichtungen (4) des zweiten RFID-Tags (5, 6), die angepasst sind, um sich von einer nicht aktivierten Position in eine aktivierte Position zu bewegen, wobei die Bewegung der Aktivierungseinrichtungen (4) von der nicht aktivierten Position in die aktivierte Position eine Zustandsänderung des zweiten RFID-Tags (5, 6) bewirkt, wobei die Bewegung der Aktivierungseinrichtungen (4) durch das Einführen des Bolzens (2) in den Schlosskörper (1) verursacht wird;
- Manipulation-Erkennungseinrichtungen (7), die sich in dem Schlosskörper (1) befinden,
wobei das Einführen des Bolzens (2) oder des Manipulationswerkzeugs in den Schlosskörper (1) das Lösen der Verbindung zwischen den Aktivierungseinrichtungen (4) und den Manipulation-Erkennungseinrichtungen (7) bewirkt und
wobei das anschließende Herausziehen des Bolzens (2) oder des Manipulationswerkzeugs aus dem Schlosskörper (1) die Bewegung der Manipulation-Erkennungseinrichtungen (7) von der Frei-Lochposition in die Sperr-Lochposition bewirkt,
**dadurch gekennzeichnet, dass** die Manipulation-Erkennungseinrichtungen(7) konfiguriert sind, um von einer Frei-Lochposition bewegbar zu sein und konfiguriert ist, um das Einführloch (12) nicht in einen Sperr-Lochposition abzufangen, und das Einführloch (12) abzufangen, um das Einführen des Bolzens (2) oder eines Manipulationswerkzeugs in den Schlosskörper (1) zu verhindern, wobei die Aktivierungseinrichtungen (4) in der nicht aktivierten Position die Manipulation-Erkennungseinrichtungen (7) eingreifen, um die Manipulation-Erkennungseinrichtungen (7) in der Frei-Lochposition zu halten.

2. - e-Siegel nach Anspruch 1, wobei sich die Aktivierungseinrichtungen (4) entlang der Einführachse (Y) von der nicht aktivierten in die aktivierte Position bewegen.

3. - e-Siegel nach Anspruch 1 oder 2, wobei sich die Manipulation-Erkennungseinrichtungen (7) entlang einer horizontalen Achse (X) senkrecht zu der Einführachse (Y) von der Frei-Lochposition zu der Sperr-Lochposition bewegen.

4. - e-Siegel nach einem der vorherigen Ansprüche, wobei der Schlosskörper (1) ein Gehäuse (11), einen Einführkanal für das Einführen des freien Endes (21) des Bolzens (2) definiert.

5. - e-Siegel nach Anspruch 4, wobei der Einführkanal innerhalb des Gehäuses (11) durch einen ersten und einen zweiten rohrförmigen Einsatz (120, 121) definiert ist, die entlang der Einführachse (Y) ausgerichtet und koaxial mit dem Loch (12) angeordnet sind.

6. - e-Siegel nach Anspruch 5, wobei die Aktivierungseinrichtungen (4) einen Stopfen (40) umfassen, der gleitend in dem Einführkanal angeordnet ist.

7. - e-Siegel nach Anspruch 5 oder 6, wobei die Aktivierungseinrichtungen (4) Eingriffseinrichtungen umfassen, die mit den Manipulation-Erkennungseinrichtungen (7) eingreifen, wenn die Manipulation-Erkennungseinrichtungen (7) in der Frei-Lochposition sind und wenn die Aktivierungseinrichtungen (4) in der nicht aktivierten Position sind.

8. - e-Siegel nach Anspruch 7, wobei die Eingriffseinrichtungen ein vertikaler Arm (411) der Aktivierungseinrichtungen (4) sind, der parallel zu der Einführachse (Y) angeordnet ist.

9. - e-Siegel nach Anspruch 8, wobei die Manipulation-Erkennungseinrichtungen (7) einen Zahn (713) für den Eingriff mit dem vertikalen Arm (411) umfassen.

10. - e-Siegel nach einem der vorherigen Ansprüche, wobei eine Feder (70) bereitgestellt ist, um die Manipulation-Erkennungseinrichtungen (7) in Richtung der Sperr-Lochposition zu drücken.

11. - e-Siegel nach einem der vorherigen Ansprüche, wobei die Manipulation-Erkennungseinrichtungen (7) eine ebene Fläche (710) umfassen, die senkrecht zu der Einführachse (Y) mit einem zweiten Loch (711) angeordnet ist, das in der Frei-Lochposition mit dem Einführloch (12) ausgerichtet ist, wobei die ebene Fläche (710) in der Sperr-Lochposition das Einführloch (12) abfängt.

12. - e-Siegel nach einem der vorherigen Ansprüche, wobei der zweite RFID-Tag (5), der sich in dem Schlosskörper (1) befindet, ein UHF-RFID-Tag (5) ultrahoher Frequenz ist.

13. - e-Siegel nach Anspruch 12, wobei die Bewegung der Aktivierungseinrichtungen (4) eine Unterbrechung der Emission des Signals von dem UHF-RFID-Tag (5) bewirkt.

14. - e-Siegel nach Anspruch 13, wobei das UHF-RFID-Tag (5) eine flache Platte (51) und eine auf die flache Platte gedruckte Schaltung (50) umfasst, ein Durchgangsloch (52) in der flachen Platte (51) gebildet und entlang der (Y)-Achse ausgerichtet ist, die ebene Platte (51) in einer überlagerten Anordnung in Bezug auf die Aktivierungseinrichtungen (4) auf einer (X, Y)-Ebene montiert ist, die Aktivierungseinrichtungen (4) einen Stift (42) umfassen, der die flache UHF-RFID-Platte (51) durch das Durchgangsloch (52) kreuzt.

15. - e-Siegel nach Anspruch 14, wobei der Stift (42) das Durchgangsloch (52) in der nicht aktivierten Position kreuzt, ohne die gedruckte Schaltung (50) zu durchtrennen, die Bewegung der Aktivierungseinrichtungen (4) entlang der Einführachse (Y) in Richtung der aktivierten Position das Durchtrennen der Schaltung (50) bewirkt und als Folge davon das UHF-RFID-Tag (5) aufhört, sein eigenes Identifizierungssignal zu emittieren.

16. - e-Siegel nach einem der vorherigen Ansprüche, wobei das zweite RFID-Tag (6), das sich in dem Schlosskörper (1) befindet, ein Nahfeldkommunikation NFC-RFID-Tag (6) ist.

17. - e-Siegel nach Anspruch 16, wobei das NFC-RFID-Tag (6) mit einem Hauptabschnitt der Aktivierungseinrichtungen (4) verbunden ist.

18. - e-Siegel nach Anspruch 17, umfassend Abschirmeinrichtungen, die angepasst sind, um das von dem NFC-RFID-Tag (6) emittierte Signal abzuschirmen.

19. - e-Siegel nach Anspruch 18, wobei die Abschirmeinrichtungen in einer überlagerten Position in Bezug auf das NFC-RFID-Tag (6) angeordnet sind, um das von dem NFC-RFID-Tag (6) emittierte Signal abzuschirmen, während das NFC-RFID-Tag (6) in der aktivierten Position der Aktivierungseinrichtungen (4) nicht durch die Abschirmeinrichtungen abgedeckt ist und das von dem Tag emittierte Identifizierungssignal gelesen werden kann.

20. - e-Siegel nach Anspruch 18 oder 19, wobei die Abschirmeinrichtungen ein Metallblatt (14) umfassen.

## Revendications

1. - Sceau électronique pour la sécurité et la traçabilité en transport, comprenant :
- un corps de serrure (1) ;
- un fanion (3) ;
- un pêne (2) fermement relié au fanion (3), ledit pêne (2) comprenant une extrémité libre (21) pour l'insertion selon un axe d'insertion (Y) dans ledit corps de serrure (1) pour la fermeture du sceau électronique, à travers un trou d'insertion (12) du corps de serrure (1) ;
- une première étiquette RFID conçue pour émettre un signal d'identification propre et reçue dans ledit fanion (3) ;
- une seconde étiquette RFID (5, 6) située dans ledit corps de serrure (1) et conçue pour émettre un signal d'identification propre lorsqu'elle est activée ;
- des moyens d'activation (4) de ladite seconde étiquette RFID (5, 6), conçus pour passer d'une position non activée à une position activée, le déplacement desdits moyens d'activation (4) de ladite position non activée à ladite position activée entraînant un changement d'état de ladite seconde étiquette RFID (5, 6), ledit déplacement desdits moyens d'activation (4) étant provoqué par l'insertion dudit pêne (2) dans ledit corps de serrure (1) ;
- des moyens de détection d'effraction (7) situés dans ledit corps de serrure (1), l'insertion du pêne (2) ou de l'outil d'effraction à l'intérieur dudit corps de serrure (1) entraînant le désengagement entre lesdits moyens d'activation (4) et lesdits moyens de détection d'effraction (7), et l'extraction ultérieure dudit pêne (2) ou de l'outil d'effraction vis-à-vis dudit corps de serrure (1) entraînant le déplacement desdits moyens de détection d'effraction (7) de ladite position de trou libre à ladite position de trou bloqué, **caractérisé par le fait que** les moyens de détection d'effraction (7) sont configurés pour être déplaçables à partir d'une position de trou libre, et sont configurés pour ne pas intercepter ledit trou d'insertion (12) à une position de trou bloqué, et pour intercepter le trou d'insertion (12) afin d'éviter l'insertion du pêne (2) ou d'un outil d'effraction à l'intérieur dudit corps de serrure (1), dans lequel, dans ladite position non activée, lesdits moyens d'activation (4) sont en prise avec lesdits moyens de détection d'effraction (7) afin de maintenir les moyens de détection d'effraction (7) dans la position de trou libre.

2. - Sceau électronique selon la revendication 1, dans lequel lesdits moyens d'activation (4) se déplacent à partir de ladite position non activée jusqu'à ladite position activée le long dudit axe d'insertion (Y).

3. - Sceau électronique selon la revendication 1 ou 2, dans lequel lesdits moyens de détection d'effraction (7) se déplacent à partir de ladite position de trou libre jusqu'à ladite position de trou bloqué le long d'un axe horizontal (X) perpendiculaire audit axe d'insertion (Y).

4. - Sceau électronique selon l'une quelconque des revendications précédentes, dans lequel ledit corps de serrure (1) définit un logement (11), et un canal d'insertion pour l'insertion de ladite extrémité libre (21) dudit pêne (2).

5. - Sceau électronique selon la revendication 4, dans lequel ledit canal d'insertion est défini à l'intérieur dudit logement (11) par un premier et un second insert tubulaire (120, 121) alignés le long dudit axe d'insertion (Y) et disposés coaxialement avec ledit trou (12).

6. - Sceau électronique selon la revendication 5, dans lequel lesdits moyens d'activation (4) comprennent un bouchon (40) disposé de manière coulissante à l'intérieur dudit canal d'insertion.

7. - Sceau électronique selon la revendication 5 ou 6, dans lequel lesdits moyens d'activation (4) comprennent des moyens de mise en prise qui sont en prise avec lesdits moyens de détection d'effraction (7) lorsque les moyens de détection d'effraction (7) sont dans la position de trou libre et lorsque les moyens d'activation (4) sont dans la position non activée.

8. - Sceau électronique selon la revendication 7, dans lequel lesdits moyens de mise en prise sont un bras vertical (411) desdits moyens d'activation (4) disposé parallèlement audit axe d'insertion (Y).

9. - Sceau électronique selon la revendication 8, dans lequel lesdits moyens de détection d'effraction (7) comprennent une dent (713) pour la mise en prise avec ledit bras vertical (411).

10. - Sceau électronique selon l'une quelconque des revendications précédentes, dans lequel un ressort (70) est prévu pour pousser lesdits moyens de détection d'effraction (7) vers ladite position de trou bloqué.

11. - Sceau électronique selon l'une quelconque des revendications précédentes, dans lequel lesdits moyens de détection d'effraction (7) comprennent une face plane (710) disposée perpendiculairement à l'axe d'insertion (Y) avec un second trou (711) qui, dans la position de trou libre, est aligné sur ledit trou d'insertion (12), dans la position de trou bloqué, la face plane (710) intercepte le trou d'insertion (12).

12. - Sceau électronique selon l'une quelconque des revendications précédentes, dans lequel ladite seconde étiquette RFID (5) située dans ledit corps de la serrure (1) est une étiquette RFID à ultra-haute fréquence, UHF, (5).

13. - Sceau électronique selon la revendication 12, dans lequel le déplacement desdits moyens d'activation (4) entraîne une interruption de l'émission du signal à partir de ladite étiquette RFID UHF (5).

14. - Sceau électronique selon la revendication 13, dans lequel ladite étiquette RFID UHF (5) comprend une carte plane (51) et un circuit (50) imprimé sur la carte plane, un trou de passage (52) est formé dans la carte plane (51) et aligné le long de l'axe (Y), la carte plane (51) est montée en agencement superposé par rapport aux moyens d'activation (4) sur un plan (X, Y), les moyens d'activation (4) comprennent une broche (42) qui traverse la carte plane RFID UHF (51) à travers le trou de passage (52).

15. - Sceau électronique selon la revendication 14, dans lequel, dans la position non activée, la broche (42) traverse le trou de passage (52) sans couper le circuit imprimé (50), le déplacement des moyens d'activation (4) le long de l'axe d'insertion (Y) vers la position activée entraîne la coupe du circuit (50) et, en conséquence, l'étiquette RFID UHF (5) cesse d'émettre le signal d'identification propre.

16. - Sceau électronique selon l'une quelconque des revendications précédentes, dans lequel ladite seconde étiquette RFID (6) située dans ledit corps de serrure (1) est une étiquette RFID à communication en champ proche, NFC, (6).

17. - Sceau électronique selon la revendication 16, l'étiquette RFID NFC (6) est reliée à une partie principale desdits moyens d'activation (4).

18. - Sceau électronique selon la revendication 17, comprenant des moyens de blindage conçus pour faire écran au signal émis par ladite étiquette RFID NFC (6).

19. - Sceau électronique selon la revendication 18, dans lequel lesdits moyens de blindage sont disposés en position superposée par rapport à ladite étiquette RFID NFC (6) afin de faire écran au signal émis par ladite étiquette RFID NFC (6), tandis que, dans la position activée desdits moyens d'activation (4), ladite étiquette RFID NFC (6) n'est pas recouverte par lesdits moyens de blindage et le signal d'identification émis par l'étiquette peut être lu.

20. - Sceau électronique selon la revendication 18 ou 19, dans lequel lesdits moyens de blindage comprennent une feuille métallique (14).
